# FASCICULE DE BREVET EUROPEEN

(11) **EP 1 167 071 B1**
(45) Date de publication et mention de la délivrance du brevet: **03.09.2003**
(21) Numéro de dépôt: 01440174.9
(22) Date de dépôt: 18.06.2001
(51) Int. Cl.: B43L 1/00

(54) **Appareil de reproduction d'images**
Bildwiedergabevorrichtung
Image reproducing apparatus

(30) Priorité: 19.06.2000 FR 0007764
(43) Date de publication de la demande: 02.01.2002
(73) Titulaire: Jeux Ravensburger S.A., 68220 Attenschwiller (FR)
(72) Inventeur: Mallard, Philippe, 68100 Mulhouse (FR)
(74) Mandataire: Nithardt, Roland

(56) Documents cités:
- EP-A- 0 010 554
- US-A- 1 490 917
- US-A- 4 265 624
- US-A- 4 427 387
- US-A- 5 287 254
- US-A- 5 432 687
- US-A- 5 785 528

## Description

La présente invention concerne un appareil de reproduction d'images comprenant une table munie d'un écran transparent sous lequel sont placés des supports d'images à reproduire sur l'écran et un dispositif d'éclairage pour éclairer les supports d'images et l'écran par le dessous.

Ce type d'appareils est bien connu par les enfants qui l'utilisent pour reproduire facilement une image. Le support d'images est par exemple placé sur une barrette introduite entre le dispositif d'éclairage et la table pourvue de l'écran. On projette ainsi sur l'écran les différentes images prévues sur le support. Cependant, la mise en place d'un support d'images sur la barrette nécessite une manipulation relativement précise et fastidieuse d'autant plus qu'elle doit être répétée à chaque changement de support d'images.

L'appareil peut être également pourvu d'un système de grossissement fixé au centre de l'écran d'une manière solidaire à la table. L'inconvénient de ce système est que la projection de l'image se fait toujours dans la même zone de l'écran et donc de la feuille à dessin, ce qui limite la création. Si l'enfant déplace sa feuille sur l'écran pour reproduire une image à un endroit préféré, la feuille n'est alors plus maintenue correctement sur l'écran, ce qui peut nuire à la qualité de la reproduction. De plus, les images sont projetées toujours dans le même sens. On ne peut donc pas orienter le dessin selon un mouvement tournant.

L'appareil peut également, comme illustré par les publications US-A-4 265 624 et US-A-1 490 917 comporter une table formée d'une paroi transparente, cette paroi transparente étant éclairée par le dessous à l'aide d'une source lumineuse dont le positionnement est réglable. Cependant, cette source lumineuse n'est pas totalement indépendante de la table. De ce fait, ces deux appareils ne permettent pas un réglage aisé de la position de la source lumineuse et de l'image à reproduire.

La présente invention vise à pallier ces inconvénients en proposant un appareil facile à mettre en oeuvre par des enfants, qui permet d'améliorer la surface de projection sur la feuille à dessin pour obtenir des possibilités de mise en page illimitées.

Dans ce but, l'invention concerne un appareil du genre indiqué en préambule, caractérisé en ce que ledit dispositif d'éclairage comporte un logement agencé pour recevoir un support d'images, et en ce que le dispositif d'éclairage est indépendant de la table et agencé de manière mobile de sorte qu'il peut être placé sous la table en n'importe quel point approprié.

D'une manière avantageuse, le dispositif d'éclairage comprend un socle, un tube support de lampe, une lampe, une bague montée sur le tube support de lampe et comportant un logement agencé pour recevoir une rondelle transparente, et des moyens d'alimentation électrique de ladite lampe.

De préférence, la bague comporte au-dessus de la rondelle transparente un logement agencé pour recevoir un support d'images qui se présente alors sous la forme de pastilles transparentes sur lesquelles des images sont imprimées, les pastilles ayant des dimensions et des formes correspondant audit logement.

Les moyens d'alimentation électrique de la lampe peuvent comprendre un adaptateur à brancher sur le secteur, un interrupteur, un circuit imprimé et des fils conducteurs reliant les moyens d'alimentation électrique entre eux et à la lampe.

De préférence, le socle est constitué d'un socle inférieur et d'un socle supérieur, ledit socle inférieur comportant un logement agencé pour recevoir le tube support de lampe. Ce logement peut être défini par exemple par deux parois verticales semi-circulaires disposées en regard l'une de l'autre.

D'une manière avantageuse, le socle inférieur comporte des logements agencés pour recevoir respectivement la prise de l'adaptateur, l'interrupteur et le circuit imprimé et présente sur son fond une protubérance conique disposée en regard de la lampe et agencée pour améliorer la diffusion de la lumière émise par la lampe.

Le tube support de lampe peut comporter une plaque support munie d'une languette et une douille agencée pour recevoir la lampe, la douille présentant des pattes d'accrochage sur la languette. Il peut comporter également plusieurs orifices agencés pour évacuer la chaleur dégagée par la lampe.

D'une manière particulièrement avantageuse, le dispositif d'éclairage comprend une molette de réglage de la focale de la rondelle transparente, cette molette de réglage étant montée mobile en rotation sur le socle supérieur, et agencée pour déplacer le tube support de lampe selon un mouvement de translation verticale, ce tube étant par ailleurs bloqué en rotation par rapport au socle.

A cet effet, la molette de réglage peut comporter sur sa face intérieure au moins un doigt agencé pour circuler dans au moins une rampe de guidage hélicoïdale prévue sur la surface extérieure du tube support de lampe et au moins une des parois verticales prévues sur le socle inférieur comporte au moins un rail de guidage vertical agencé pour se déplacer dans au moins une rainure verticale prévue sur la surface extérieure du tube support de lampe de sorte que le tube support de lampe effectue uniquement un mouvement de translation verticale.

La molette de réglage peut comporter au moins deux pattes de fixation sur le socle supérieur. Elle peut également comporter au moins une butée en rotation, une paroi du logement pour le tube support de lampe prévu dans le socle inférieur comportant à chaque extrémité une butée correspondante.

Pour améliorer leur préhension, la molette de réglage et la bague peuvent comporter sur leur périphérie des cannelures agencées pour améliorer leur préhension.

De préférence, la table comporte à une extrémité au moins une poignée mobile en rotation et agencée pour se replier sous la table et, à l'autre extrémité au moins un pied de forme tubulaire et solidaire de la table. Le pied peut comprendre à une extrémité un logement agencé pour recevoir des crayons et l'adaptateur et à l'autre extrémité un logement agencé pour recevoir le dispositif d'éclairage.

L'appareil selon l'invention peut comporter des feuilles d'activités partiellement pré-imprimées, de dimensions et de formes correspondant à l'écran.

Il peut être aussi prévu un boîtier de rangement pour les supports d'images de forme cylindrique et comprenant deux coques symétriques et articulées entre elles au moyen d'une charnière. Avantageusement, le boîtier comporte plusieurs compartiments agencés pour recevoir les supports d'images triés ainsi qu'à sa base un logement agencé pour recevoir et protéger la bague du dispositif d'éclairage quand le boîtier est placé sur le dispositif d'éclairage.

La présente invention et ses avantages apparaîtront mieux dans la description suivante d'un exemple de réalisation, en référence aux dessins annexés, dans lesquels:
- la figure 1 représente une vue d'ensemble de l'appareil selon l'invention,
- les figures 2a et 2b sont des vues en coupe du dispositif d'éclairage respectivement en position haute et en position basse,
- les figures 3a et 3b sont des vues en plan du dispositif d'éclairage respectivement en position haute et en position basse,
- la figure 4 est une vue en plan du dispositif d'éclairage protégé par le boîtier de rangement,
- les figures 5a, 5b, 5c sont des vues du tube support de lampe respectivement en plan, en coupe et de côté,
- la figure 6 est une vue en coupe de la bague,
- les figures 7a et 7b sont des vues du socle inférieur respectivement de dessus et de côté,
- les figures 8a et 8b sont des vues du socle supérieur respectivement de dessous et de face,
- les figures 9a et 9b sont des vues de la molette de réglage respectivement de dessus et en coupe,
- la figure 10 est une vue de dessus en coupe du dispositif d'éclairage,
- la figure 11 est une vue en coupe du socle inférieur sur lequel est monté le tube support de lampe, et
- les figures 12a et 12b sont des vues du boîtier de rangement ouvert respectivement en plan et de dessus.

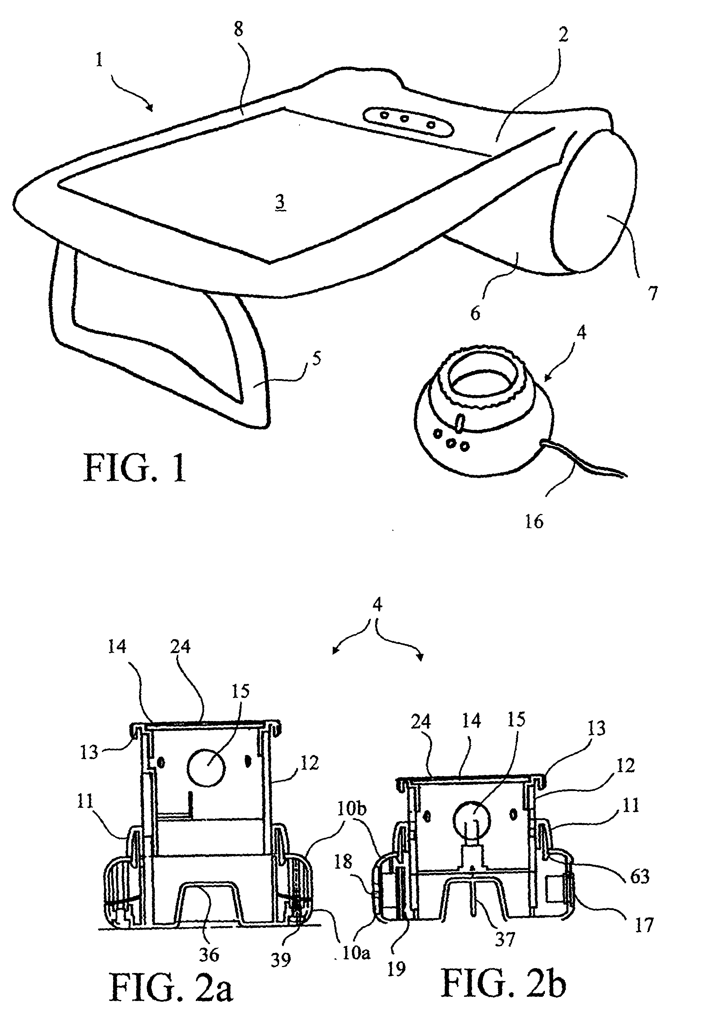

En référence à la figure 1, l'appareil de reproduction d'images 1 selon l'invention comprend une table 2 munie d'un écran transparent 3 et un dispositif d'éclairage 4. La table 2 est de forme rectangulaire. Elle comporte à une extrémité une poignée 5 montée mobile en rotation sous la table 2 et agencée pour se replier lorsque l'appareil 1 est rangé. La poignée 5 est utilisée pour le transport mais joue également le rôle du pied avant de l'appareil de reproduction d'images 1 en cours d'utilisation. A l'arrière de l'appareil de reproduction d'images 1 se trouve un pied 6 de forme tubulaire et solidaire de la table 2. Il présente à chaque extrémité un logement (non représenté), l'un pour recevoir par exemple des crayons et un adaptateur utilisé pour le dispositif d'éclairage, l'autre pour recevoir par exemple le dispositif d'éclairage. Chaque logement est fermé par un couvercle 7.

L'écran 3 est de forme sensiblement carrée et par exemple de dimensions égales à 210 x 210 mm, il permet de recevoir une feuille de format A 4 que l'on aura préalablement découpé aux bonnes dimensions. Cet écran 3 peut être réalisé en Plexiglas® ou tout autre matériau transparent d'une épaisseur suffisante pour éviter une déformation lors de l'appui de la main qui dessine. L'écran 3 est assemblé à la table 2 par thermosoudure. Sur le pourtour de l'écran 3, la table 2 comporte des rebords 8 faisant saillie et définissant un logement pour recevoir et bloquer dans ce logement une feuille à dessiner, tout en permettant de la retirer facilement.

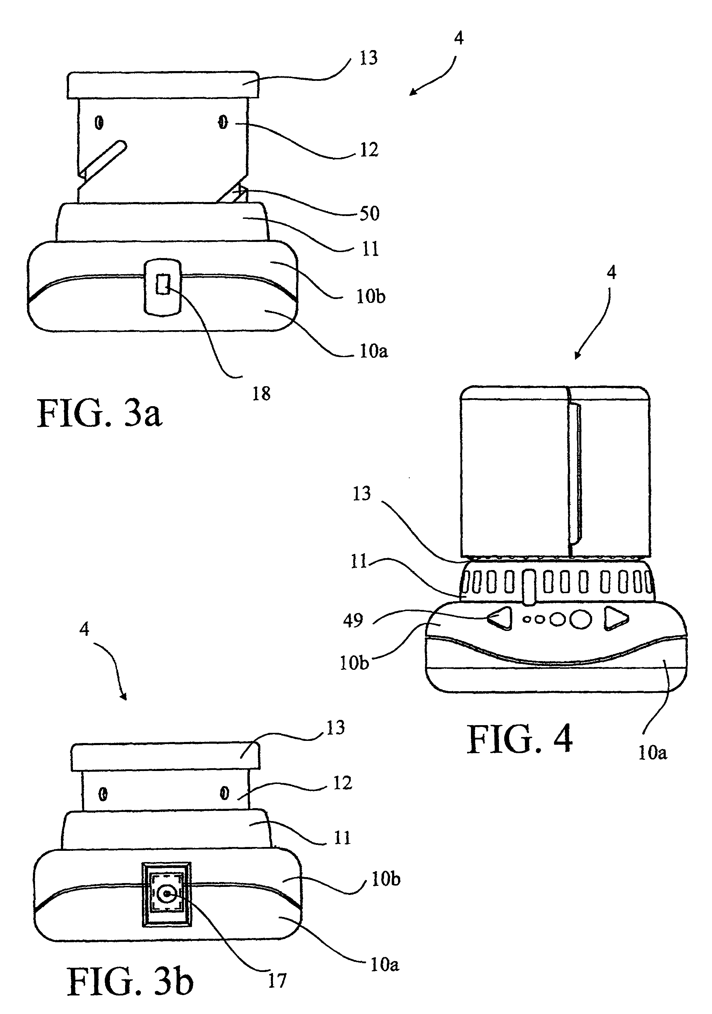

En référence aux figures 2a, 2b, 3a et 3b, le dispositif d'éclairage 4 comprend un socle inférieur 10a, un socle supérieur 10b, une molette de réglage 11, un tube support de lampe 12, une lampe 15 et une bague 13 dans laquelle est logée une rondelle transparente 14, qui peut être réalisée en Plexiglas® ou tout autre matériau transparent. Dans l'exemple décrit, le dispositif d'éclairage 4 sert donc également de zoom pour agrandir ou rétrécir l'image projetée. On peut prévoir un dispositif d'éclairage simplifié sans système de grossissement. Le dispositif d'éclairage 4 comprend également des moyens d'alimentation électrique de la lampe 15. Ces moyens comprennent un adaptateur 16 à brancher sur le secteur, une prise 17 pour connecter l'adaptateur et prévue sur le socle inférieur 10a, un interrupteur 18 et son circuit imprimé 19 disposés dans le socle inférieur 10a à l'opposé de la prise 17, et des fils électriques (non représentés) reliant la prise 17, l'interrupteur 18 et son circuit imprimé 19 d'une part et, reliant le circuit imprimé 19 et la lampe 15 d'autre part.

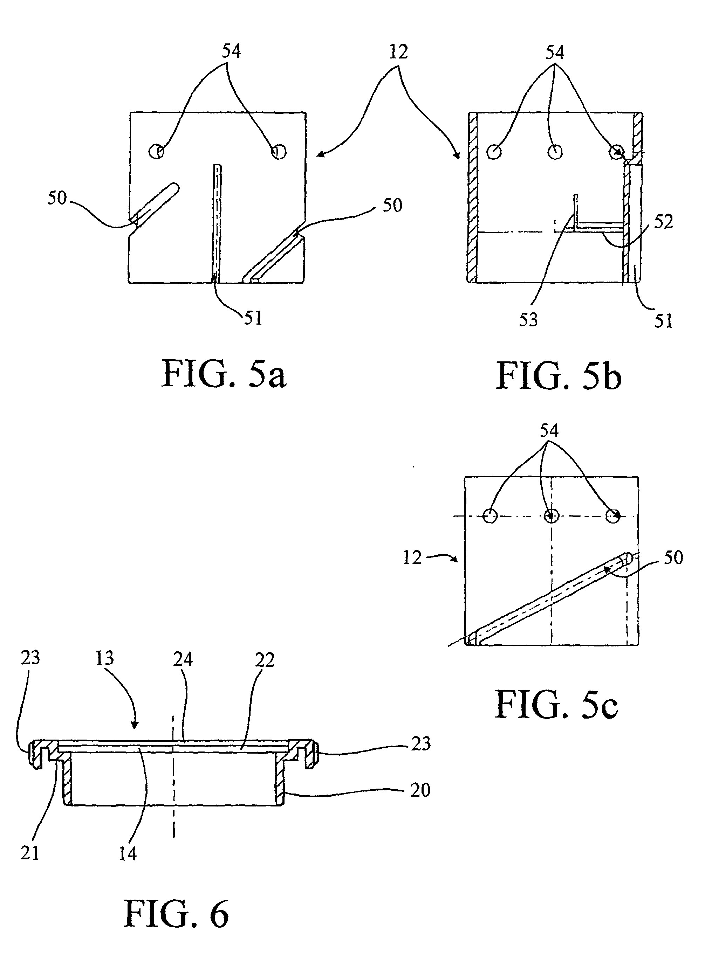

En référence à la figure 6, la bague 13 comprend un corps 20 de forme sensiblement circulaire de diamètre inférieur à celui du tube support de lampe 12 et prolongé par un rebord 21. Le corps 20 est monté libre dans ledit tube support de lampe 12 qui vient en butée contre le rebord 21. Ainsi, la bague 13 peut être retirée facilement du tube support de lampe 12 pour permettre d'accéder à l'ampoule 15 lorsqu'elle doit être changée. La bague 13 comporte également à sa périphérie des cannelures 23 améliorant sa préhension. Au-dessus du corps 20 est prévu un logement 22 de dimensions suffisantes pour recevoir la rondelle transparente 14 puis un support d'images 24. A cet effet, le support d'images 24 présente la forme d'une pastille transparente de forme sensiblement circulaire et de diamètre légèrement inférieur à celui du logement 22. Chaque pastille comporte un dessin imprimé, permettant ainsi à l'enfant de reproduire à volonté différents dessins.

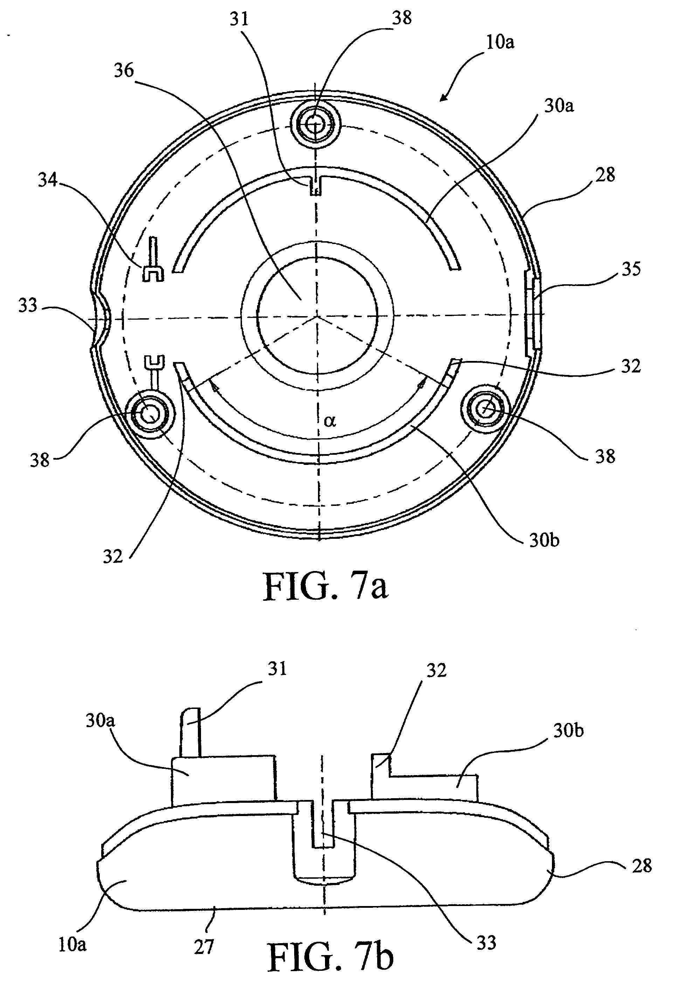

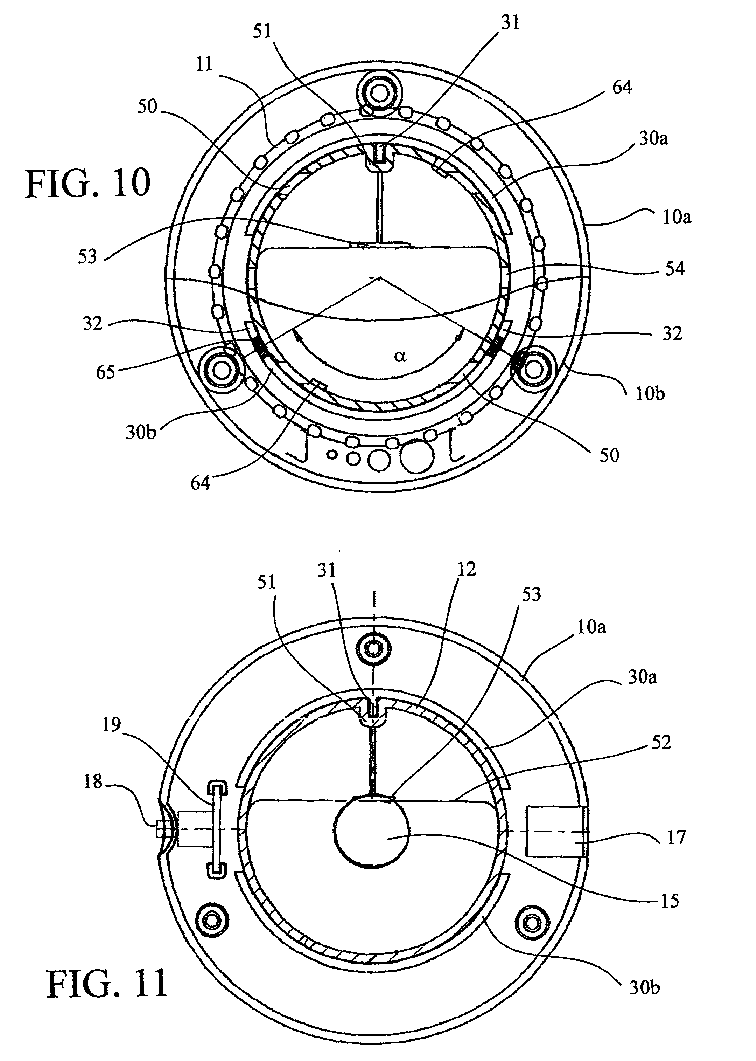

En référence aux figures 7a, 7b, et 11, le socle inférieur 10a est de section transversale sensiblement circulaire. Il comprend un fond 27 entouré d'une paroi 28 périphérique et sensiblement verticale. Le bord supérieur de cette paroi 28 présente une forme en vagues et en creux, le socle supérieur 10b ayant des formes complémentaires. Le socle inférieur 10a comporte deux parois 30a, 30b sensiblement verticales et semi-circulaires, solidaires du fond 27 et distantes l'une de l'autre pour délimiter un logement destiné à recevoir et guider en translation verticale le tube support de lampe 12. A cet effet, la paroi 30a comporte sur sa face intérieure un rail de guidage 31 vertical dont le fonctionnement sera décrit ultérieurement. La paroi 30b comporte à chaque extrémité un épaulement 32 formant butée dont le fonctionnement sera décrit ultérieurement.

Les parois 28 comportent un logement 33 pour recevoir l'interrupteur 18, un logement 34 défini par deux pattes verticales en U pour recevoir le circuit imprimé 19, et un logement 35 pour recevoir la prise 17 de l'adaptateur 16. Le fond 27 comporte en son centre une protubérance conique 36 faisant saillie vers le haut et disposée en regard de la lampe 15. II est recouvert d'une feuille d'aspect métallisé afin d'améliorer la diffusion de la lumière émise par la lampe 15. Sous la protubérance 36 est prévue une rainure de renfort 37.

Enfin, le fond 27 du socle inférieur 10a présente trois trous traversants 38 pour le logement et le passage de trois vis de fixation 39.

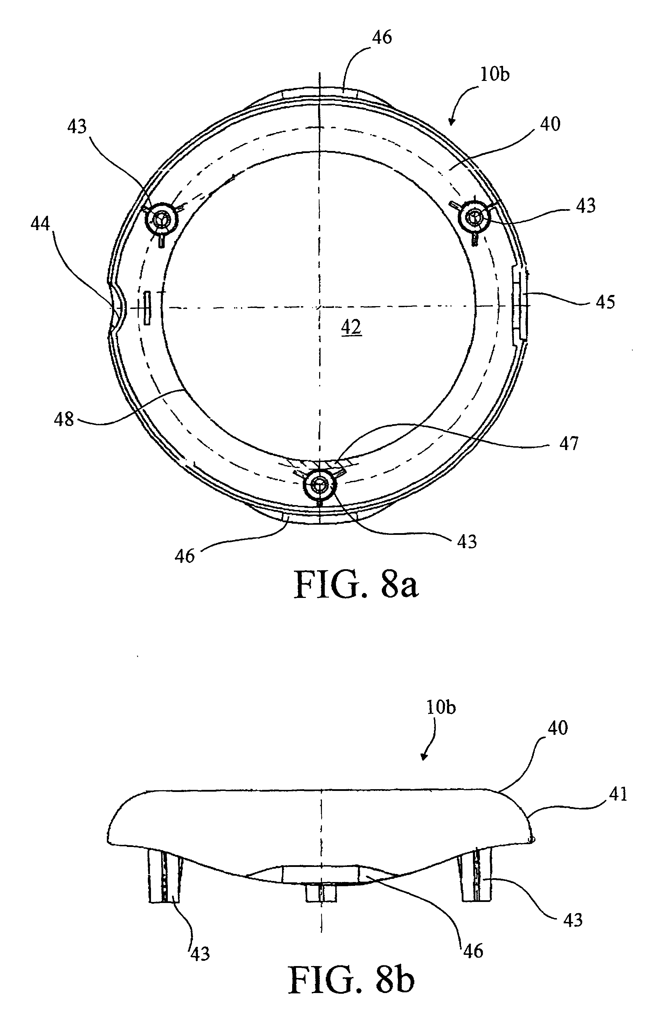

En référence aux figures 8a et 8b, le socle supérieur 10b présente une section transversale sensiblement annulaire. Il présente la forme d'une couronne 40 entourée vers le bas par une paroi 41 arrondie périphérique. Le bord de cette paroi 41 présente une forme en vagues et en creux complémentaires à la forme du socle inférieur 10a. Au centre de la couronne 40 est défini un passage 42 agencé pour recevoir le tube support de lampe 12.

La paroi 41 comporte un logement 44 correspondant au logement 33 du socle inférieur 10a destiné à recevoir l'interrupteur 18 et un logement 45 correspondant au logement 35 du socle inférieur 10a agencé pour recevoir la prise 17. Le long de la paroi 41 sont prévues deux protubérances 46 diamétralement opposées permettant d'améliorer la préhension du dispositif d'éclairage 4.

Sous la couronne 40 font saillie trois pattes 43 placées en regard des trous 38 prévus sur le socle inférieur 10a et comprenant un alésage fileté destiné à recevoir les vis 39 permettant l'assemblage du socle inférieur 10a et du socle supérieur 10b. Les pattes 43 sont placées à une certaine distance du pourtour intérieur 48 de la couronne 40 de manière à laisser une zone circulaire 47 libre de passage, dont le rôle est décrit ci-après.

Des gravures 49 peuvent être réalisées sur la paroi 41 par exemple pour décorer le dispositif d'éclairage 4.

En référence aux figures Sa à 5c, le tube support de lampe 12 comporte sur sa surface extérieure deux rampes de guidage hélicoïdales 50 symétriques et une rainure verticale 51 partant de la base du tube 12 et se terminant approximativement aux 2/3 de sa hauteur. La rainure verticale 51 est de forme complémentaire au rail de guidage 31 prévu sur le socle inférieur 10a, ce rail de guidage 31 coulissant dans la rainure 51.

A l'intérieur, le tube support de lampe 12 comporte une plaque support 52 munie à son extrémité d'une languette 53 agencée pour recevoir une douille au moyen de pattes d'accrochage prévues sur la douille. La lampe 15 est ensuite introduite dans cette douille.

Enfin, le tube support de lampe 12 présente dans sa partie haute plusieurs orifices 54 permettant l'évacuation de la chaleur dégagée par la lampe 15 et d'éviter son claquage.

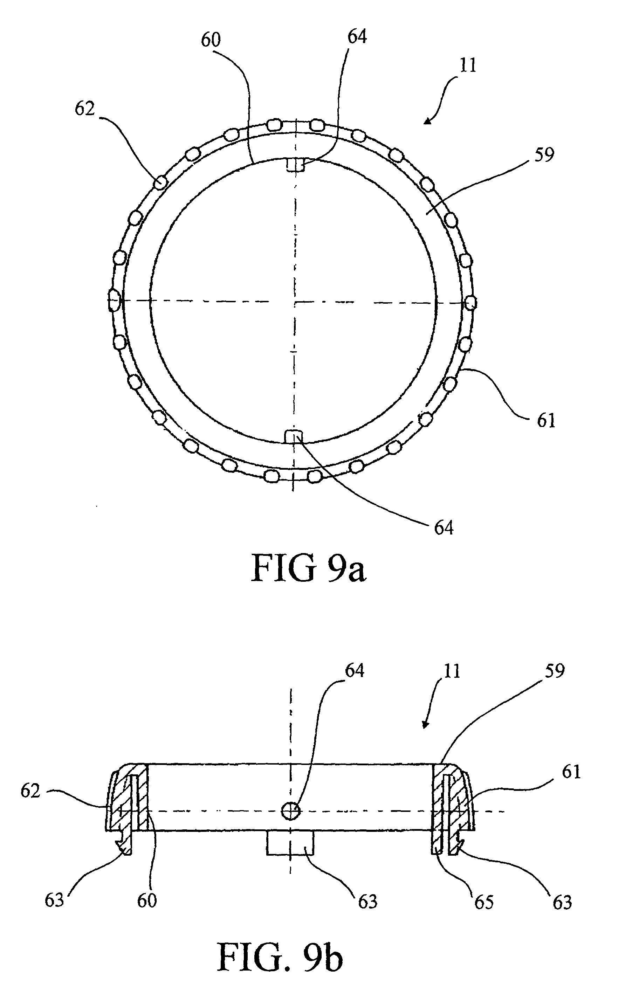

En référence aux figures 9a et 9b, la molette de réglage 11 présente la forme d'une couronne 59 avec une chemise intérieure 60 et une chemise extérieure 61. Sur la chemise extérieure 61 sont prévues des cannelures 62 améliorant la préhension de la molette de réglage 11. La chemise extérieure 61 est prolongée vers le bas par trois pattes de fixation 63 présentant à leur extrémité un crochet agencé pour se clipper sur le pourtour intérieur 48 de la couronne 40 du socle supérieur 10b comme le montrent les figures 2a et 2b. Les pattes 63 coulissent le long de ce pourtour 48 dans la zone 47 libre de passage de sorte que la molette de réglage 11 est montée mobile en rotation sur le socle supérieur 10b.

La chemise intérieure 60 définit un logement dans lequel coulisse verticalement le tube support de lampe 12. A cet effet, elle comporte sur son pourtour intérieur deux doigts 64 cylindriques agencés pour circuler dans les rampes hélicoïdales 50 prévues sur le tube support de lampe 12. Ce tube 12 étant empêché de tourner du fait du rail 31 et de la rainure de guidage 51, ne peut effectuer qu'un mouvement de translation verticale entre une position basse représentée sur les figures 2b et 3b et une position haute représentée sur les figures 2a et 3a. La chemise intérieure 60 comporte également à sa périphérie une butée 65 coopérant avec les butées 32 prévues sur le socle inférieur 10a et délimitant ainsi les positions basse et haute du tube support de lampe 12 quand la molette 12 est tournée d'un angle α par exemple égal à 120° (cf. Fig. 7a et Fig. 10).

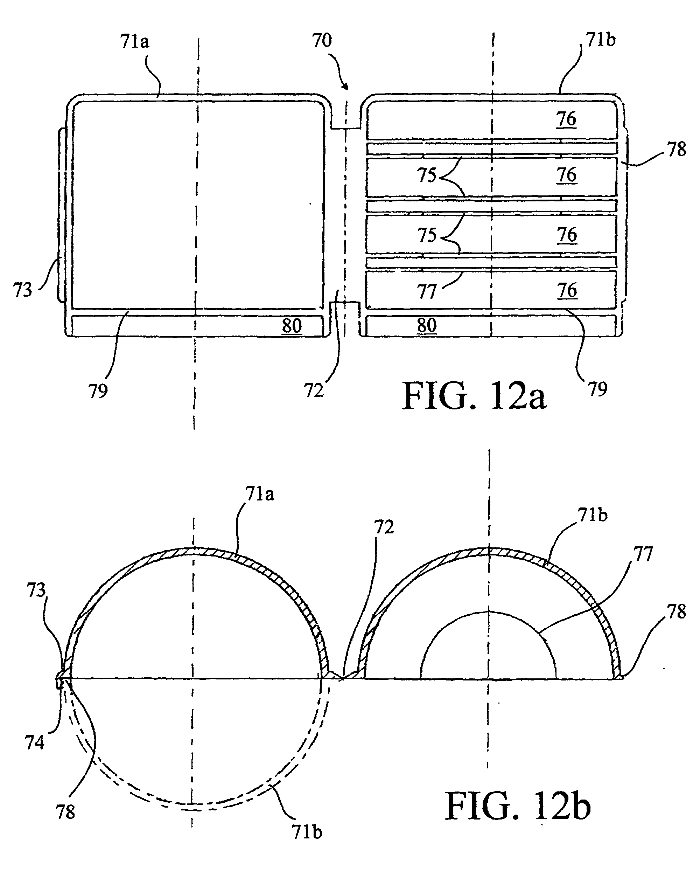

En référence aux figures 12a et 12b, les supports d'images sont rangés dans un boîtier de rangement 70 de forme sensiblement cylindrique et constitué d'une coque supérieure 71a et d'une coque inférieure 71b, symétriques et articulées entre elles au moyen d'une charnière souple 72. La coque inférieure 71b comporte trois parois de séparation 75 formant des compartiments 76 pour recevoir verticalement des supports d'images 24 et permettre leur tri de manière à faciliter leur gestion pendant l'utilisation de l'appareil de reproduction d'images 1. Les parois 75 comportent des découpes semi-circulaires 77. La coque inférieure 71b présente sur son bord longitudinal libre un bourrelet 78. La coque supérieure 71a est creuse et comporte sur son bord longitudinal libre un bourrelet 73 formant une rainure 74 agencée pour se clipper sur le bourrelet 78 de la coque inférieure 71b lorsque la coque supérieure 71a est fermée sur la coque inférieure 71b permettant ainsi le verrouillage du boîtier 70.

Les coques supérieure 71a et inférieure 71b comportent un fond 79 placé en retrait, de manière à former un logement 80 agencé pour recevoir la bague 13 lorsque le boîtier 70 est disposé sur le dispositif d'éclairage 4 de manière à protéger la rondelle transparente 14 (cf. Fig. 4).

L'appareil de reproduction d'images 1 selon l'invention s'utilise d'une manière très simple. L'enfant déplie tout d'abord la poignée 5 pour installer la table 2. Il sort ensuite le dispositif d'éclairage 4, l'adaptateur et les crayons des logements prévus dans le pied 6. Il dispose une feuille sur l'écran 3. La feuille peut être une feuille vierge ou une feuille d'activités partiellement pré-imprimée selon certains thèmes. L'enfant choisit alors un support d'images 24 rangé dans le boîtier 70 et le place sur la rondelle transparente 14 dans la bague 13 du dispositif d'éclairage 4. Le support d'images 24 peut être projeté recto ou verso. Il peut être orienté sous la feuille dans toutes les positions sur 360° en tournant le dispositif d'éclairage 4, ce qui permet de multiplier les possibilités créatives. L'adaptateur 16 est branché sur le secteur et connecté à la prise 17 et le dispositif d'éclairage 4 est allumé au moyen de l'interrupteur 18. Les images dessinées sur le support d'images 24 sont alors projetées sur la feuille posée sur l'écran 3. Pour choisir la taille du dessin à reproduire, l'enfant tourne la molette de réglage 11 qui permet un taux de grossissement de l'image par effet zoom de 100 % à 200 %. Lorsque la molette 11 est tournée dans le sens horaire, les doigts 64 se déplacent dans les rampes de guidage hélicoïdales 50 du tube support de lampe 12. Ce dernier, n'ayant aucun degré de liberté en rotation du fait de la rainure 51 et du rail 31 sur le socle inférieur 10a, est donc poussé selon un mouvement de translation verticale vers le haut jusqu'à la position haute atteinte lorsque la butée 65 heurte une butée 32 prévue sur le socle inférieur 10a. Cette position haute du tube support de lampe 12 et donc de la bague 13 avec la rondelle transparente 14 et le support d'images 24 correspond à un taux de grossissement de 100%. Dans ce cas, la source lumineuse 15 est à proximité de l'écran 3 et l'image projetée à 100% bénéficie de l'éclairage maximum, ce qui offre à l'enfant une précision de trait adaptée à la difficulté de reproduction d'une petite image. Inversement, lorsque la molette 11 est tournée dans le sens anti-horaire, les doigts 64 se déplacent dans les rampes hélicoïdales 50 et ramènent le tube support de lampe en position basse atteinte lorsque la butée 65 heurte l'autre butée 32. Dans cette position, l'image projetée est grossie de 200 %. Elle offre moins de luminosité mais cette dernière reste suffisante pour la reproduction. La molette de réglage 11 est très facile à tourner du fait des cannelures 62 et permet de grossir et diminuer l'image projetée au pourcentage près. Les doigts 64 pris dans les rampes hélicoïdales 50 permettent un maintien solide du tube support de lampe 12 dans la position de grossissement définie.

Le dispositif d'éclairage 4 étant entièrement mobile et indépendant de la table 2, l'enfant le déplace avec sa main sous l'écran 3 et le positionne sous n'importe quel endroit de l'écran 3, permettant une utilisation de la feuille à 90%. L'emplacement des images rétro éclairées sur la feuille peut être choisi à volonté sans avoir à soulever ou à déplacer cette dernière, cette opération pouvant être répétée autant de fois qu'on le souhaite.

L'enfant reproduit alors son image sur la feuille en repassant les contours à l'aide d'un stylo noir par exemple et répétera l'opération autant de fois qu'il le souhaite en modifiant les images projetées et les taux de grossissement. Il peut ensuite mettre son dessin en couleurs. Le changement de support d'images 24 est simple puisqu'il suffit de glisser le dispositif d'éclairage 4 à l'extérieur de la table 2 par un des côtés ouverts et de changer le support d'images 24. Cette opération peut également être faite en "aveugle", l'accès au dispositif d'éclairage 4 pouvant se faire par les côtés de la table 2.

Quand le jeu est terminé, les différents accessoires sont à nouveau rangés dans le pied 6, ce qui permet un transport aisé de l'appareil au moyen de la poignée 5. Les supports d'images 24 rangés dans leur boîtier 70 sont également facilement transportables tout en conservant leur classification par thèmes.

## Revendications

1. Appareil de reproduction d'images (1) comprenant une table (2) munie d'un écran (3) transparent sous lequel sont placés des supports d'images (24) à reproduire sur l'écran (3) et un dispositif d'éclairage (4) pour éclairer les supports d'images (24) et l'écran (3) par le dessous, **caractérisé en ce que** ledit dispositif d'éclairage (4) comporte au moins un logement (22) agencé pour recevoir au moins un support d'images (24), et **en ce que** ledit dispositif d'éclairage (4) est indépendant de ladite table (2) et agencé de manière mobile de sorte qu'il peut être placé sous ladite table (2) en n'importe quel point approprié.

2. Appareil selon la revendication 1, **caractérisé en ce que** ledit dispositif d'éclairage (4) comprend un socle (10a, 10b), un tube support de lampe (12), une lampe (15), une bague (13) montée sur ledit tube support de lampe (12) et comportant un logement (22) agencé pour recevoir une rondelle transparente (14), et des moyens d'alimentation électrique de ladite lampe (15).

3. Appareil selon la revendication 2, **caractérisé en ce que** ladite bague (13) comporte au-dessus de ladite rondelle transparente (14) au moins un logement (22) agencé pour recevoir au moins un support d'images (24).

4. Appareil selon la revendication 3, **caractérisé en ce que** lesdits supports d'images (24) se présentent sous la forme de pastilles transparentes sur lesquelles des images sont imprimées, lesdites pastilles ayant des dimensions et des formes correspondant audit logement (22) prévu sur ladite bague (13) au-dessus de ladite rondelle transparente (14).

5. Appareil selon la revendication 2, **caractérisé en ce que** lesdits moyens d'alimentation électrique de ladite lampe (15) comprennent un adaptateur (16) à brancher sur le secteur, un interrupteur (18), un circuit imprimé (19) et des fils conducteurs reliant lesdits moyens d'alimentation électrique entre eux et à ladite lampe (15).

6. Appareil selon la revendication 2, **caractérisé en ce que** ledit socle est constitué d'un socle inférieur (10a) et d'un socle supérieur (10b), et **en ce que** ledit socle inférieur (10a) comporte un logement agencé pour recevoir ledit tube support de lampe (12).

7. Appareil selon la revendication 6, **caractérisé en ce que** ledit logement du tube support de lampe (12) est défini par deux parois (30a, 30b) sensiblement verticales et semi-circulaires disposées en regard l'une de l'autre.

8. Appareil selon les revendications 5 et 6, **caractérisé en ce que** ledit socle inférieur (10a) comporte des logements (35, 33, 34) agencés pour recevoir respectivement une prise (17) de l'adaptateur (16), l'interrupteur (18) et le circuit imprimé (19).

9. Appareil selon la revendication 6, **caractérisé en ce que** ledit socle inférieur (10a) présente sur son fond (27) une protubérance (36) sensiblement conique disposée en regard de ladite lampe (15) agencée pour améliorer la diffusion de la lumière émise par ladite lampe (15).

10. Appareil selon la revendication 2, **caractérisé en ce que** ledit tube support de lampe (12) comporte une plaque support (52) munie d'une languette (53) et une douille agencée pour recevoir ladite lampe (15), ladite douille présentant des pattes d'accrochage sur ladite languette (53).

11. Appareil selon la revendication 2, **caractérisé en ce que** ledit tube support de lampe (12) comporte plusieurs orifices (54) agencés pour évacuer la chaleur dégagée par ladite lampe (15).

12. Appareil selon la revendication 6, **caractérisé en ce que** ledit dispositif d'éclairage (4) comprend une molette de réglage (11) de la focale de ladite rondelle transparente (14), ladite molette (11) étant montée mobile en rotation sur ledit socle supérieur (10b) et agencée pour déplacer ledit tube support de lampe (12) selon un mouvement de translation verticale, ce tube support de lampe (12) étant par ailleurs bloqué en rotation par rapport audit socle (10b).

13. Appareil selon la revendication 12, **caractérisé en ce que** ladite molette de réglage (11) comporte sur sa face intérieure (60) au moins un doigt (64) agencé pour circuler dans au moins une rampe de guidage (50) hélicoïdale prévues sur la surface extérieure dudit tube support de lampe (12) et **en ce qu'**au moins une desdites parois verticales (30a) prévues sur ledit socle inférieur (10a) comporte au moins un rail de guidage (31) sensiblement vertical agencé pour se déplacer dans au moins une rainure verticale (51) prévue sur la surface extérieure dudit tube support de lampe (12) de sorte que ledit tube support de lampe (12) effectue uniquement un mouvement de translation verticale.

14. Appareil selon la revendication 12, **caractérisé en ce que** ladite molette de réglage (11) comporte au moins deux pattes de fixation (63) sur ledit socle supérieur (10b).

15. Appareil selon la revendication 12, **caractérisé en ce que** ladite molette de réglage (11) comporte une butée en rotation (65) et **en ce qu'**une paroi (30b) dudit logement pour ledit tube support de lampe (12) prévu dans ledit socle inférieur (10a) comporte à chaque extrémité une butée correspondante (32).

16. Appareil selon les revendications 2 et 12, **caractérisé en ce que** ladite molette de réglage (11) et ladite bague (13) comportent sur leur périphérie des cannelures (62, 23) agencées pour améliorer leur préhension.

17. Appareil selon la revendication 1, **caractérisé en ce que** ladite table (2) comporte à une extrémité au moins une poignée (5) mobile en rotation et agencée pour se replier sous ladite table (2) et, à l'autre extrémité au moins un pied (6) de forme tubulaire et solidaire de ladite table (2).

18. Appareil selon la revendication 17, **caractérisé en ce que** ledit pied (6) de ladite table (2) comprend à une extrémité au moins un logement agencé pour recevoir des crayons et ledit adaptateur (16) et à l'autre extrémité au moins un logement agencé pour recevoir ledit dispositif d'éclairage (4).

19. Appareil selon la revendication 1, **caractérisé en ce qu'**il comporte des feuilles d'activités partiellement pré-imprimées et de dimensions et de formes correspondantes audit écran (3).

20. Appareil selon la revendication 1, **caractérisé en ce qu'**il comporte un boîtier de rangement (70) pour lesdits supports d'images (24), de forme sensiblement cylindrique et comprenant deux coques (71a, 71b) symétriques et articulées entre elles au moyen d'une charnière (72).

21. Appareil selon la revendication 20, **caractérisé en ce que** ledit boîtier (70) comporte plusieurs compartiments (76) pour recevoir lesdits supports d'images (24) triés.

22. Appareil selon la revendication 20, **caractérisé en ce que** ledit boîtier (70) comporte à sa base au moins un logement (80) agencé pour recevoir et protéger ladite bague (13) dudit dispositif d'éclairage (4) quand ledit boîtier (70) est placé sur ledit dispositif d'éclairage (4).

## Patentansprüche

1. Bildwiedergabevorrichtung (1), wobei einen mit einem durchsichtigen Bildschirm (3) ausgestatteten Tisch (2) aufweist, unter dem auf dem Bildschirm (3) wiederzugebende Bildträger (24) und eine Beleuchtungseinrichtung (4) zum Beleuchten der Bildträger (24) und des Bildschirmes (3) von unten angeordnet sind, **dadurch gekennzeichnet, dass** die Beleuchtungseinrichtung (4) mindestens eine Aufnahme (22) aufweist, die zum Aufnehmen mindestens eines Bildträgers (24) vorgesehen ist, und dass die Beleuchtungseinrichtung (4) von dem Tisch (2) unabhängig und so beweglich angeordnet ist, dass sie an jedem geeigneten Punkt unterhalb des Tisches (2) positionierbar ist.

2. Vorrichtung nach Anspruch 1, **dadurch gekennzeichnet, dass** die Beleuchtungseinrichtung (4) einen Sockel (10a,10b), ein Lampentragrohr (12), eine Lampe (15), einen auf dem Lampentragrohr (12) angebrachten Ring (13) mit einer Aufnahme (22) zum Aufnehmen einer durchsichtigen Scheibe (14) und Stromversorgungseinrichtungen für die Lampe (15) aufweist.

3. Vorrichtung nach Anspruch 2, **dadurch gekennzeichnet, dass** der Ring (13) über der durchsichtigen Scheibe (14) mindestens eine Aufnahme (22) aufweist, die zum Aufnehmen mindestens eines Bildträgers (24) vorgesehen ist.

4. Vorrichtung nach Anspruch 3, **dadurch gekennzeichnet, dass** die Bildträger (24) die Form von durchsichtigen Tabletten aufweisen, auf welchen Bilder aufgedruckt sind, wobei die Tabletten der auf dem Ring (13) über der durchsichtigen Scheibe (14) vorgesehenen Aufnahme (22) entsprechende Abmessungen und Formen aufweisen.

5. Vorrichtung nach Anspruch 2, **dadurch gekennzeichnet, dass** die Stromversorgungseinrichtungen für die Lampe (15) ein an das Stromnetz anzuschließendes Netzteil (16), einen Schalter (18), eine gedruckte Schaltung (19) und die Stromversorgungseinrichtungen untereinander und mit der Lampe (15) verbindende Leitungsdrähte umfassen.

6. Vorrichtung nach Anspruch 2, **dadurch gekennzeichnet dass** der Sockel aus einem unteren Sockel (10a) und aus einem oberen Sockel (10b) besteht, und dass der untere Sockel (10a) eine zum Aufnehmen des Lampentragrohres (12) vorgesehene Aufnahme aufweist.

7. Vorrichtung nach Anspruch 6, **dadurch gekennzeichnet, dass** die Aufnahme des Lampentragrohres (12) durch zwei praktisch vertikale und halbkreisförmige, einander gegenüberliegend angeordnete Wände (30a,30b) festgelegt ist.

8. Vorrichtung nach den Ansprüchen 5 und 6, **dadurch gekennzeichnet, dass** der untere Sockel (10a) Aufnahmen (35,33,34) aufweist, die zum Aufnehmen jeweils einer Steckdose (17) des Netzteils (16), des Schalters (18) und der gedruckten Schaltung (19) vorgesehen sind.

9. Vorrichtung nach Anspruch 6, **dadurch gekennzeichnet, dass** der untere Sockel (10a) auf seinem Boden (27) eine der Lampe (15) gegenüberliegend angeordnete, praktisch konische Ausbauchung (36) aufweist, die zum Verbessern der Verteilung des von der Lampe (15) ausgestrahlten Lichtes vorgesehen ist.

10. Vorrichtung nach Anspruch 2, **dadurch gekennzeichnet, dass** das Lampentragrohr (12) eine mit einer Lasche (53) ausgestattete Trägerplatte (52) und eine zum Aufnehmen der Lampe (15) vorgesehene Fassung aufweist, wobei die Fassung Klauen zum Einhängen auf der Lasche (53) aufweist.

11. Vorrichtung nach Anspruch 2, **dadurch gekennzeichnet, dass** das Lampentragrohr (12) mehrere zum Abführen der von der Lampe (15) freigesetzten Wärme vorgesehene Öffnungen (54) aufweist.

12. Vorrichtung nach Anspruch 6, **dadurch gekennzeichnet, dass** die Beleuchtungseinrichtung (4) ein Rädchen (11) zum Einstellen der Brennweite der durchsichtigen Scheibe (14) aufweist, wobei das Rädchen (11) drehbar beweglich auf dem oberen Sockel (10b) angeordnet und zum Verlagern des Lampentragrohres (12) in Form einer vertikalen Translationsbewegung vorgesehen ist, wobei das Lampentragrohr (12) außerdem im Verhältnis zum Sockel (10b) gegen eine Drehbewegung arretiert ist.

13. Vorrichtung nach Anspruch 12, **dadurch gekennzeichnet, dass** das Rädchen (11) zum Einstellen auf seiner Innenseite (60) mindestens einen Zapfen (64) aufweist, der zum Umlaufen in mindestens einer auf der Außenfläche des Lampentragrohres (12) vorgesehenen spiralförmigen Führungsrampe (50) vorgesehen ist, und dass mindestens eine der auf dem unteren Sockel (10a) vorgesehenen vertikalen Wände (30a) mindestens eine praktisch vertikale Führungsschiene (31) aufweist, die so angeordnet ist, dass sie sich in mindestens einer auf der Außenfläche des Lampentragrohres (12) vorgesehenen vertikalen Nut (51) so verlagert, dass das Lampentragrohr (12) ausschließlich eine vertikale Translationsbewegung ausführt.

14. Vorrichtung nach Anspruch 12, **dadurch gekennzeichnet, dass** das Rädchen (11) zum Einstellen mindestens zwei Laschen (63) zum Befestigen auf dem oberen Sockel (10b) aufweist.

15. Vorrichtung nach Anspruch 12, **dadurch gekennzeichnet, dass** das Rädchen (11) zum Einstellen einen Drehanschlag (65) aufweist, und dass eine Wand (30b) der Aufnahme für das in dem unteren Sockel (10a) vorgesehene Lampentragrohr (12) an jedem äußersten Ende einen entsprechenden Anschlag (32) aufweist.

16. Vorrichtung nach den Ansprüchen 2 und 12, **dadurch gekennzeichnet, dass** das Rädchen (11) zum Einstellen und der Ring (13) auf ihrem Umfang Rillen (62,23) aufweisen, die zum Verbessern von deren Eingriff vorgesehen sind.

17. Vorrichtung nach Anspruch 1, **dadurch gekennzeichnet, dass** der Tisch (2) an einem äußersten Ende mindestens einen drehbar beweglichen Handgriff (5) aufweist, der so angeordnet ist, dass er unter den Tisch (2) zurückklappt, und der am anderen äußersten Ende mindestens einen rohrförmigen und fest mit dem Tisch (2) verbundenen Fuß (6) aufweist.

18. Vorrichtung nach Anspruch 17, **dadurch gekennzeichnet, dass** der Fuß (6) des Tisches (2) an einem äußersten Ende mindestens eine Aufnahme aufweist, die zum Aufnehmen von Stiften und von dem Netzteil (16) vorgesehen ist, und am anderen äußersten Ende mindestens eine Aufnahme zum Aufnehmen der Beleuchtungseinrichtung (4) aufweist.

19. Vorrichtung nach Anspruch 1, **dadurch gekennzeichnet, dass** sie teilweise vorgedruckte Tätigkeitsblätter umfasst, die dem Bildschirm (3) entsprechende Abmessungen und Formen aufweisen.

20. Vorrichtung nach Anspruch 1, **dadurch gekennzeichnet, dass** sie ein Aufbewahrungsgehäuse (70) mit praktisch zylindrischer Form für die Bildträger (24) aufweist, welches zwei symmetrische, mittels eines Scharniers (72) zueinander gelenkig gelagerte Schalen (71a,71b) umfasst.

21. Vorrichtung nach Anspruch 20, **dadurch gekennzeichnet, dass** das Gehäuse (70) mehrere Abteile (76) zum Aufnehmen der sortierten Bildträger (24) aufweist.

22. Vorrichtung nach Anspruch 20, **dadurch gekennzeichnet, dass** das Gehäuse (70) an seiner Basis mindestens eine Aufnahme (80) aufweist, die zum Aufnehmen und Schützen des Rings (13) der Beleuchtungseinrichtung (4) vorgesehen ist, wenn das Gehäuse (70) auf der Beleuchtungseinrichtung (4) positioniert wird.

## Claims

1. An image reproducing apparatus (1) comprising a table (2) equipped with a transparent screen (3) beneath which are placed image media (24) to be reproduced on the screen (3) and a lighting device (4) to illuminate the image recording media (24) and the screen (3) from below, **characterised in that** the said lighting device (4) comprises at least one seat (22) designed to receive at least one image medium (24), and **in that** the said lighting device (4) is independent of the said table (2) and moveably designed so that it can be placed beneath the said table (2) in any appropriate point.

2. An apparatus according to Claim 1, **characterised in that** the said lighting device (4) comprises a base (10a, 10b), a lamp support tube (12), a lamp (15), a ring (13) mounted on the said lamp support tube (12) and comprising a seat (22) designed to receive a transparent washer (14), and electricity supply means for the said lamp (15).

3. An apparatus according to Claim 2, **characterised in that** the said ring (13) comprises above the said transparent washer (14) at least one seat (22) designed to receive at least one image medium (24).

4. An apparatus according to Claim 3, **characterised in that** the said image media (24) are in the form of transparent pads on which images are printed, the said pads having dimensions and shapes corresponding to the said seat (22) provided on the said ring (13) above the said transparent washer (14).

5. An apparatus according to Claim 2, **characterised in that** the said electricity supply means for the said lamp (15) comprise an adapter (16) to be connected to the mains, a switch (18), a printed circuit (19) and live wires connecting the said electricity supply means between them and the said lamp (15).

6. An apparatus according to Claim 2, **characterised in that** the said base is formed by a lower base (10a) and an upper base (10b), and **in that** the said lower base (10a) comprises a seat designed to receive the said lamp support tube (12).

7. An apparatus according to Claim 6, **characterised in that** the said seat of the lamp support tube (12) is defined by two substantially vertical, semi-circular walls (30a, 30b) disposed opposite each other.

8. An apparatus according to Claims 5 and 6, **characterised in that** the said lower base (10a) comprises seats (35, 33, 34) designed to receive respectively a socket (17) for the adapter (16), the switch (18) and the printed circuit (19).

9. An apparatus according to Claim 6, **characterised in that** the said lower base (10a) has on its bottom (27) a substantially conical protuberance (36) disposed opposite the said lamp (15) designed to improve the diffusion of the light emitted by the said lamp (15).

10. An apparatus according to Claim 2, **characterised in that** the said lamp support tube (12) comprises a support plate (52) equipped with a tongue (53) and a bush designed to receive the said lamp (15), the said bush having lugs for hooking onto the said tongue (53).

11. An apparatus according to Claim 2, **characterised in that** the said lamp support tube (12) comprises several orifices (54) designed to evacuate the heat emitted by the said lamp (15).

12. An apparatus according to Claim 6, **characterised in that** the said lighting device (4) comprises a wheel (11) for adjusting the focus of the said transparent washer (14), the said wheel (11) being rotatably mounted on the said upper base (10b) and designed to move the said lamp support tube (12) in a vertical movement of translation, this lamp support tube (12) moreover being prevented from rotating in relation to the said base (10b).

13. An apparatus according to Claim 12, **characterised in that** the said adjusting wheel (11) comprises on its inner face (60) at least one pin (64) designed to move in at least one helicoidal guide ramp (50) provided on the outer surface of the said lamp support tube (12) and **in that** at least one of the said vertical walls (30a) provided on the said lower base (10a) comprises at least one substantially vertical guide rail (31) designed to move in at least one vertical groove (51) provided on the outer surface of the said lamp support tube (12) so that the said lamp support tube (12) only performs a vertical movement of translation.

14. An apparatus according to Claim 12, **characterised in that** the said adjusting wheel (11) comprises at least two attachment lugs (63) on the said upper base (10b).

15. An apparatus according to Claim 12, **characterised in that** the said adjusting wheel (11) comprises a rotating stop (65) and **in that** one wall (30b) of the said seat for the said lamp support tube (12) provided in the said lower base (10a) comprises a corresponding stop (32) at each end.

16. An apparatus according to Claims 2 and 12, **characterised in that** the said adjusting wheel (11) and the said ring (13) comprise on their periphery grooves (62, 23) designed to improve gripping.

17. An apparatus according to Claim 1, **characterised in that** the said table (2) comprises at one end at least one handle (5) moveable in rotation and designed to fold up beneath the said table (2), and, at the other end at least one foot (6) having a tubular shape and integral with the said table (2).

18. An apparatus according to Claim 17, **characterised in that** the said foot (6) of the said table (2) comprises at one end at least one seat designed to receive crayons and the said adapter (16) and at the other end at least one seat designed to receive the said lighting device (4).

19. An apparatus according to Claim 1, **characterised in that** it comprises partially preprinted activity sheets having dimensions and shapes corresponding to the said screen (3).

20. An apparatus according to Claim 1, **characterised in that** it comprises a housing (70) for the said image media (24), which are substantially cylindrical and comprise two symmetrical shells (71a, 71b) jointed between them by means of a hinge (72).

21. An apparatus according to Claim 20, **characterised in that** the said housing (70) comprises several compartments (76) to receive the said assorted image media (24).

22. An apparatus according to Claim 20, **characterised in that** the said housing (70) comprises at its base at least one seat (80) designed to receive and to protect the said ring (13) of the said lighting device (4) when the said housing (70) is placed on the said lighting device (4).
